(19) Europäisches Patentamt
European Patent Office
Office européen des brevets

(11) **EP 2 891 738 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
***D06F 37/42*** *(2006.01)*

(21) Anmeldenummer: **14194706.9**

(22) Anmeldetag: **25.11.2014**

(54) **Verfahren zum Betreiben eines Haushaltsgeräts und Haushaltsgerät**

Domestic appliance and method for operating same

Procédé de fonctionnement d'un appareil ménager et appareil ménager

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2013 DE 102013114206**

(43) Veröffentlichungstag der Anmeldung:
**08.07.2015 Patentblatt 2015/28**

(73) Patentinhaber: **Miele & Cie. KG**
**33332 Gütersloh (DE)**

(72) Erfinder:
• **Sieding, Dirk**
**44534 Lünen (DE)**
• **Müller, Helge**
**33332 Gütersloh (DE)**
• **Merling, Bernd**
**33659 Bielefeld (DE)**
• **Bicker, Rainer**
**33415 Verl (DE)**
• **Linnemann, Hartmut**
**33378 Rheda-Wiedenbrück (DE)**
• **Henn, Karsten**
**33617 Bielefeld (DE)**
• **Wilken, Jakob**
**33739 Bielefeld (DE)**

(56) Entgegenhaltungen:
DE-A1- 19 832 292    US-A1- 2011 030 460
US-B2- 8 258 733

**EP 2 891 738 B1**

**Beschreibung**

Die Erfindung betrifft ein Verfahren zum Betreiben eines Haushaltsgeräts und ein Haushaltsgerät. Insbesondere eignet sich das Verfahren für eine Waschmaschine oder einen Trockner als Haushaltsgerät. Das Haushaltsgerät weist ein Gehäuse, eine in dem Gehäuse angeordnete drehbewegliche Trommel zur Aufnahme von Wäsche, einen Motor zum Antrieb der Trommel, eine Steuereinrichtung zum Steuern des Motors und eine Auswerteinheit auf. Bei derartigen Haushaltsgeräten ist es möglich, dass Lebewesen wie beispielsweise Kinder in die Trommel klettern und beispielsweise beim Start eines Wasch- oder Schleuderprozesses schwer verletzt oder getötet werden.

Aus der DE 102004049650 B3 oder DE 102004049647 B3 sind Möglichkeiten beschrieben, wie sich in der Trommel befindende Kinder zu Bewegung animiert werden und dann deren Bewegung erkannt werden kann. Um das Kind zu Bewegung zu animieren, wird dabei allerdings Wasser eingesetzt. Dies birgt einerseits das Problem, ob das zugeführte Wasser ausreichend ist, um das Kind zu Bewegung zu animieren, und andererseits das Problem, dass das Kind sich an dem Wasser verschlucken und ersticken oder darin ertrinken kann. Zudem ist die Zufuhr von Wasser bei Programmen, in denen Wäsche nicht durchfeuchtet werden soll wie beispielsweise beim Schleudern, Abpumpen von Flüssigkeit aus der Trommel, Auffrischen mit Warmluft oder Heißdampf störend, da das Wasser für diese Programme verschlechterte Ausgangsbedingungen schafft. Wenn beispielsweise trockene Textilien mittels Heißluft aufgefrischt werden sollen, ist es nachteilig, wenn diese zuvor durchnässt werden. Weiterhin können die in den vorstehend genannten Druckschriften beschrieben Verfahren nicht bei Trocknern eingesetzt werden.

Die US 2011/0030460 A1 beschreibt Massendetektion über Simulation der Trommel als Torsionsfeder mit der Motor-Antriebachse als Federachse. Über die Federkonstante kann Rückschluss auf die in der Trommel befindliche Masse gezogen werden.

Der Erfindung stellt sich somit das Problem, mit einfachen Mitteln den Schutz für ein in einer Trommel eines Haushaltsgeräts befindliches Lebewesen wie ein Kind zu verbessern.

Erfindungsgemäß wird dieses Problem durch ein Verfahren mit den Merkmalen des Patentanspruchs 1 und durch ein Haushaltsgerät mit den Merkmalen des Patentanspruchs 11 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben mehr Sicherheit darin, dass ein Wasserverbrauch vermieden werden kann. Das sich in der Trommel des Haushaltsgerätes befindende Lebewesen wie ein Kind braucht sich nicht zu bewegen, um erkannt zu werden. Dies ist insbesondere vorteilhaft, da sowieso unsicher ist, ob wie im Stand der Technik vorgeschlagenes in die Trommel einlaufendes Wasser das Kind dazu animiert, sich zu bewegen. Daher bietet das hierin vorgeschlagene Verfahren mehr Sicherheit. Zudem werden ein nicht gewolltes Befeuchten der Wäsche und der damit verbundene Wasserverbrauch vermieden. Ferner ist das Verfahren nicht nur bei Waschmaschinen sondern auch bei Trocknern einsetzbar. Das Verfahren eignet sich dazu, zu erkennen, ob sich ein Lebewesen in dem Haushaltsgerät befindet. Insbesondere wird das Verfahren zur Sicherstellung eingesetzt, dass sich kein Kind in dem Haushaltsgerät befindet. Im Nachfolgenden wird daher das Verfahren in Bezug auf die Erkennung eines Kindes im Haushaltsgerät beschrieben. Das Verfahren ist aber allgemein zur Erkennung von Lebewesen in einem Haushaltsgerät geeignet.

Das Verfahren zum Betreiben eines Haushaltsgeräts weist nach Starten eines Programms des Haushaltsgeräts die Schritte auf: Steuern des Motors durch das Steuergerät derart, dass die Trommel von dem Motor angetrieben und um einen Winkel <90° bewegt wird und bei Erreichen des Winkels der Motor stromlos geschaltet wird, Erfassen eines Drehzahlsignals der Trommel ab dem Stromlosschalten des Motors über einen vorbestimmten ersten Zeitraum und Auswerten der erfassten Drehzahlsignale durch die Auswerteinheit durch Bilden eines Werts, und Unterbrechen des Programms, wenn der Wert größer als ein vorbestimmter erster Schwellenwert ist.

Die große auf einen Punkt konzentrierte Masse eines sich evtl. in der Trommel befindenden Kindes wird bei diesem Verfahren ausgenutzt. Eine fortlaufende Trommelbewegung könnte dazu führen, dass sich das Kind in der Trommel überschlägt und verletzt. Der Motor wird vorzugsweise so gesteuert, dass er eine festgelegte Anzahl an Umdrehungen dreht, die die Trommel um einen Winkel aus der Ruhelage auslenkt. Dieser Winkel muss unter 90°, bezogen auf die betriebsgemäße Aufstellposition des Haushaltsgeräts, liegen, damit ein Überschlagen des Kindes verhindert wird. Die Antriebsleistung des Motors wird dabei gewählt, sodass der Winkel sicher und schnell erreicht wird. Sobald der Winkel erreicht wird, wird der Motor stromlos geschaltet, sodass er kein Antriebs- bzw. Bremsmoment einbringt. Nun beginnt die Trommel mit dem sich evtl. darin befindenden Kind eine Pendelbewegung auszuführen, die mit der Zeit durch Reibungsverluste gedämpft wird, sodass sich nach einer gewissen Zeit die Ruhelage wieder einstellt. In diesem Zustand ohne Antriebsmomente reicht die Reibung zwischen Kind und Trommel aus, damit Trommel und Kind die gleiche Pendelbewegung ausführen. Diese Pendelbewegung wird mit der Auswerteinheit erkannt. Dazu wird ab dem Zeitpunkt des Stromlosschaltens des Motors das Drehzahlsignal ausgewertet und ein Wert gebildet, der in dem vorbestimmten ersten Zeitraum nach dem Stromlosschalten des Motors ermittelt, wie ausgeprägt die Pendelbewegung ist. Die Pendelbewegung ist mit einem in der Trommel vorhandenen Kind aufgrund der konzentrierten Masse deutlich stärker als bei einer reinen Wäschebeladung ohne Kind. Wenn der ermittelte Wert größer als ein vorbestimmter erster Schwellenwert ist, wird daher das Programm unterbrochen.

Vorzugsweise werden die vorstehenden Schritte im Falle des Unterbrechens des Programms nach Ablauf eines vorbestimmten zweiten Zeitraums wiederholt.

In dem vorbestimmten zweiten Zeitraum kann dem Kind die Möglichkeit gegeben werden, sich aus dem Haushaltsgerät zu befreien. Alternativ kann das Haushaltsgerät ein Signal ausgeben, um darauf hinzuweisen, dass es festgestellt hat, dass sich ein Kind in der Trommel befindet. Wenn im Falle des Unterbrechens des Programms die vorstehenden Schritte nach Ablauf des vorbestimmten zweiten Zeitraums wiederholt werden, wird dadurch sichergestellt, dass ein sich in der Trommel befindendes Kind aus der Trommel entfernt wurde, bevor das Programm fortgeführt wird. Wenn das Programm eine vorbestimmte Anzahl an Malen wie beispielsweise drei Malen unterbrochen wird, kann es vorzugsweise abgebrochen werden.

Mit dem Verfahren wird eine Pendelerkennung durchgeführt. An einem Nachpendeln der Trommel wird erkannt, ob sich ein Kind in der Trommel befindet. Im Nachfolgenden wird das Verfahren daher auch mit dem Ausdruck Pendelerkennung bezeichnet.

Der vorbestimmte erste Zeitraum liegt bevorzugt zwischen 1 und 5 Sekunden. Der vorbestimmte zweite Zeitraum liegt bevorzugt zwischen 5 und 300 Sekunden.

In einer bevorzugten Ausführungsform wird der Wert durch Differenzieren der erfassten Drehzahlsignale und betragsmäßige Summation gebildet. Je kleiner der Wert, desto weniger stark ist die Pendelbewegung der Trommel ausgeprägt. Insbesondere wird der Wert anhand einer Varianz der folgenden Formel (1) ermittelt:

$$\text{Varianz} \; = \frac{1}{N-1} \cdot \left( \sum_{i=1}^{N} U_i^2 - \frac{1}{N} \cdot \left( \sum_{i=1}^{N} U_i \right)^2 \right) \quad (1)$$

mit N=400, wobei U die erfasste Drehzahl darstellt.

Der Winkel, um den die Trommel bewegt wird, ist kleiner als 90°, bevorzugt zwischen 10 und 70° und bevorzugter zwischen 20 und 50°. Die Winkelangabe der Bewegung der Trommel bezieht sich auf den aus der Ruhelage der Trommel bewegten Winkel, bezogen auf die betriebsgemäße Aufstellposition des Haushaltsgeräts.

Vorzugsweise liegt die Antriebsleistung des Motors (4) im Bereich von 50 und 500 W. Dadurch wird sichergestellt, dass die Trommel um den Winkel auch bei großer Massenträgheit schnell und sicher erreicht wird.

Der vorbestimmte erste Schwellenwert ist so gewählt, dass zwischen feuchter Wäsche und einem Kind unterschieden werden kann.

In einer bevorzugten Ausführungsform wird nach Unterbrechen des Programms eine Tür des Haushaltsgeräts, die eine in dem Gehäuse angeordnete Beladungsöffnung zum Beladen der Trommel verschließt, entriegelt und/oder geöffnet. Dies gibt dem Kind die Möglichkeit, die entriegelte Tür zu öffnen bzw. sich durch die geöffnete Tür aus der Trommel des Haushaltsgeräts und aus dem Haushaltsgerät zu entfernen. Alternativ oder zusätzlich wird von dem Haushaltsgerät ein Warnsignal ausgegeben. Wenn nur ein Warnsignal ausgegeben wird, ohne dass die Tür entriegelt oder geöffnet wird, wird eine sich in der Nähe des Haushaltsgeräts befindende Personen darauf hingewiesen, dass sich ein Kind in dem Haushaltsgerät befindet und dementsprechende Maßnahmen ergreifen. Wenn das Warnsignal zusätzlich zu einer entriegelten und/oder geöffneten Tür ausgegeben wird, kann dadurch beispielsweise sichergestellt werden, dass eine sich in der Nähe des Haushaltsgeräts befindende Person die Tür des Haushaltsgeräts wieder verschließt, damit das Haushaltsgerät das Programm fortsetzen kann, was in diesem Fall heißt, dass erneut die Verfahrensschritte, die vor dem Unterbrechen des Programms durchgeführt wurden, wiederholt werden, um sicherzustellen, dass sich nun kein Kind mehr in der Trommel befindet.

In einer bevorzugten Ausgestaltung weist das Verfahren die Schritte auf: Zuführen einer vorbestimmten Menge Wasser in die Trommel, wenn der Wert zwischen einem vorbestimmten zweiten Schwellenwert, der kleiner ist als der vorbestimmte erste Schwellenwert, und dem vorbestimmten ersten Schwellenwert liegt, Erfassen eines Drehzahlsignals der Trommel über einen vorbestimmten dritten Zeitraum nach dem Zuführen der Menge Wasser in die Trommel, Auswerten der erfassten Drehzahlsignale durch die Auswerteinheit durch Bilden einer Größe, Unterbrechen des Programms über einen vorbestimmten vierten Zeitraum, wenn die Größe größer ist als ein vorbestimmter dritter Schwellenwert, und Wiederholen der vorstehenden Schritte bei Unterbrechung des Programms nach Ablauf des vorbestimmten vierten Zeitraums.

Der zweite Schwellenwert stellt eine weitere Sicherheitsvorkehrung dar. Wenn der vorbestimmte erste Schwellenwert nicht überschritten wurde, aber der vorbestimmte zweite Schwellenwert, dann besteht für das Haushaltsgerät eine Unsicherheit, ob sich ein Kind oder aber eine große evtl. auch feuchte Wäschemenge in der Trommel des Haushaltsgeräts befindet. In diesem Fall wird zur weiteren Absicherung versucht, ein sich evtl. in dem Haushaltsgerät befindendes Kind durch Zuführen einer vorbestimmten Menge an Wasser in die Trommel zu Bewegung zu animieren. Es ist insbesondere bei kleinen Beladungsmengen möglich, die Wasserzufuhr derart auszulegen, dass es zu keiner Befeuchtung der Wäsche kommt. Bei größeren oder auch evtl. feuchten Wäschemengen wird aus Sicherheitsgründen notfalls in Kauf genommen, dass die Wäsche befeuchtet wird. Wird nach der Wasserzufuhr eine unzulässige Bewegung der Trommel dadurch erkannt, dass die ermittelte Größe größer als der vorbestimmte dritte Schwellenwert ist, wird die Tür entriegelt oder geöffnet und/oder ein Warnsignal wird von dem Haushaltsgerät ausgegeben. Verfahren zur Überwachung unzulässiger Bewegung der Trommel nach Wasserzufuhr in die Trommel sind in der DE 102004049647 B3 und DE 102004049650 B3 beschrieben, deren Offenbarungen hiermit vollständig miteinbezogen sind.

In einer bevorzugten Ausführungsform wird das Programm, wenn es eine vorbestimmte Anzahl an Malen unterbrochen wird, fortgeführt, wenn das Programm eine Zufuhr an Wasser in die Trommel vorsieht, und abgebrochen, wenn das Programm keinen Zulauf an Wasser in die Trommel vorsieht. In dieser Verfahrensvariante ist das Haushaltsgerät eine Waschmaschine. In bestimmten Fällen wie bei Beladung einer Waschmaschine mit feuchter Wäsche, bei der die Nässe zusätzlich zu der Wäsche Gewicht bringt, kann es schwierig sein, zu unterscheiden, ob sich ein Kind oder feuchte Wäsche in der Waschmaschine befindet. Wenn das Programm der Waschmaschine keine Zufuhr von Wasser in die Trommel vorsieht, ist es unwahrscheinlich, dass feuchte Wäsche in die Waschmaschine eingefüllt wurde. Daher wird das Programm in diesem Fall abgebrochen. Wenn das Programm eine Zufuhr von Wasser in die Trommel vorsieht, wird das Programm fortgesetzt. Durch die Zufuhr von Wasser in die Trommel kann ein Kind zu Bewegung animiert werden und die Bewegung des Kindes erfasst werden, wie beispielsweise in der DE 102004049647 B3 oder DE 102004049650 B3 beschrieben.

In einer bevorzugten Ausführungsform weist die Verfahrensvariante, in der das Programm eine Zufuhr an Wasser in die Trommel vorsieht, die Schritte auf: Aktivieren einer Pumpe zum Abpumpen von Flüssigkeit aus der Trommel, Erfassen eines Drehzahlsignals der Trommel über einen vorbestimmten fünften Zeitraum, Auswerten der erfassten Drehzahlsignale durch die Auswerteinheit durch Bilden eines Abpump-Werts, Unterbrechen des Programms über einen vorbestimmten sechsten Zeitraum, wenn der Abpump-Wert größer ist als ein vorbestimmter vierter Schwellenwert, Wiederholen der vorstehenden Schritte bei Unterbrechung des Programms nach Ablauf des vorbestimmten sechsten Zeitraums eine vorbestimmte Anzahl an Malen, und Abbrechen des Programms, wenn die vorbestimmte Anzahl an Malen erreicht wird. Der Abpump-Wert kann anhand der vorstehenden Formel (1) ermittelt werden. In dieser Ausgestaltung des Verfahrens wird versucht, durch das Aktivieren der Pumpe ein sich in der Trommel befindendes Kind dazu zu animieren, sich zu bewegen und die Bewegung des Kindes zu detektieren. Hier wird eine Bewegungserkennung beim Pumpen durchgeführt.

Vorzugsweise weist das Verfahren, wenn das Programm eine Zufuhr an Wasser in die Trommel vorsieht, die Schritte auf: Aktivieren eines Zulaufs an Wasser in die Trommel, Erfassen eines Drehzahlsignals der Trommel über einen vorbestimmten siebenten Zeitraum nach dem Zuführen der Menge Wasser in die Trommel, Auswerten der erfassten Drehzahlsignale durch die Auswerteinheit durch Bilden eines Wasserzufuhr-Werts, Unterbrechen des Programms über einen vorbestimmten achten Zeitraum, wenn der Wasserzufuhr-Wert größer ist als ein vorbestimmter fünfter Schwellenwert, Wiederholen der vorstehenden Schritte bei Unterbrechung des Programms nach Ablauf des vorbestimmten achten Zeitraums eine vorbestimmte Anzahl an Malen, Abbrechen des Programms, wenn die vorbestimmte Anzahl an Malen erreicht wird. Der Wasserzufuhr-Wert kann anhand der vorstehenden Formel (1) ermittelt werden. In dieser Ausgestaltung des Verfahrens wird versucht, durch die Zufuhr von Wasser in die Trommel ein sich in der Trommel befindendes Kind dazu zu animieren, sich zu bewegen und die Bewegung des Kindes zu detektieren. Hier wird eine Bewegungserkennung bei Wasserzufuhr durchgeführt. Die Bewegungserkennung bei Wasserzufuhr wird vorzugsweise nach der Bewegungserkennung beim Pumpen durchgeführt.

In einer bevorzugten Ausführungsform weist das Verfahren im Anschluss an den Wasserzulauf in die Trommel weiterhin die Schritte auf: Deaktivieren des Zulaufs an Wasser in die Trommel, Erfassen eines Drehzahlsignals der Trommel über einen vorbestimmten neunten Zeitraum, Auswerten der erfassten Drehzahlsignale durch die Auswerteinheit durch Bilden eines Enderkennung-Werts, Unterbrechen des Programms über einen vorbestimmten zehnten Zeitraum, wenn der Enderkennung-Wert größer ist als ein vorbestimmter sechster Schwellenwert, Wiederholen der vorstehenden Schritte bei Unterbrechung des Programms nach Ablauf des vorbestimmten zehnten Zeitraums eine vorbestimmte Anzahl an Malen, Abbrechen des Programms, wenn die vorbestimmte Anzahl an Malen erreicht wird. Der Enderkennung-Wert kann anhand der vorstehenden Formel (1) ermittelt werden. In dieser Ausgestaltung des Verfahrens wird versucht, bei hoher Empfindlichkeit eine Bewegung eines sich in der Trommel befindendes Kindes zu detektieren. Hier wird eine Bewegungserkennung nach Wasserzufuhr durchgeführt.

Vorzugsweise wird in einer Ausgestaltung des Verfahrens, bei der das Programm eine Zufuhr von Wasser in die Trommel einer Waschmaschine vorsieht, zuerst die vorstehend beschriebene Erkennung einer Pendelbewegung durchgeführt. Anschließend kann nacheinander die Bewegungserkennung beim Pumpen, die Bewegungserkennung bei Wasserzufuhr und/oder die Bewegungserkennung nach Wasserzufuhr durchgeführt werden.

Die Erfindung betrifft ferner ein Haushaltsgerät mit einem Gehäuse, einer in dem Gehäuse angeordneten drehbeweglichen Trommel, einem Motor zum Antrieb der Trommel, einer Steuereinrichtung zum Steuern des Motors und einer Auswerteinheit, wobei die Steuereinrichtung dazu eingerichtet ist, das Haushaltsgerät gemäß den vorstehend beschriebenen Verfahren zu betreiben. Das Haushaltsgerät ist in der Lage, anhand der durch das Verfahren initiierten Pendelbewegung der Trommel zu erkennen, ob sich ein Kind in der Trommel befindet, und in diesem Fall das Programm zu unterbrechen, damit das Kind aus der Trommel sich aus der Trommel befreien oder aus ihr entfernt werden kann. Vorteilhaft ist das Haushaltsgerät weiterhin in der Lage, eine Bewegungserkennung, wie vorstehend beschrieben, durchzuführen. Bei dem Haushaltsgerät handelt es vorzugsweise sich um eine Waschmaschine, einen Trockner oder deren Kombination. Das Haushaltsgerät ist insbesondere dazu eingerichtet, ein Kind in seiner Trommel zu detektieren, kann aber auch ausgelegt sein, um ein anderes Lebewesen wie beispielsweise ein Hund, eine Katze oder ein Kaninchen zu erkennen.

Ein Ausführungsbeispiel der Erfindung ist in den Zeichnungen rein schematisch dargestellt und wird nachfolgend näher beschrieben. Es zeigt

Fig. 1    schematisch eine Querschnittsansicht eines Haushaltsgeräts;
Fig. 2    ein Ablaufdiagramm eines Verfahrens;
Fig. 3    ein Ablaufdiagramm eines sich an das in Fig. 2 gezeigte Verfahren anschließenden Verfahrens;
Fig. 4    ein Ablaufdiagramm eines sich an das in Fig. 3 gezeigte Verfahren anschließenden Verfahrens; und
Fig. 5    ein Ablaufdiagramm eines sich an das in Fig. 4 gezeigte Verfahren anschließenden Verfahrens.

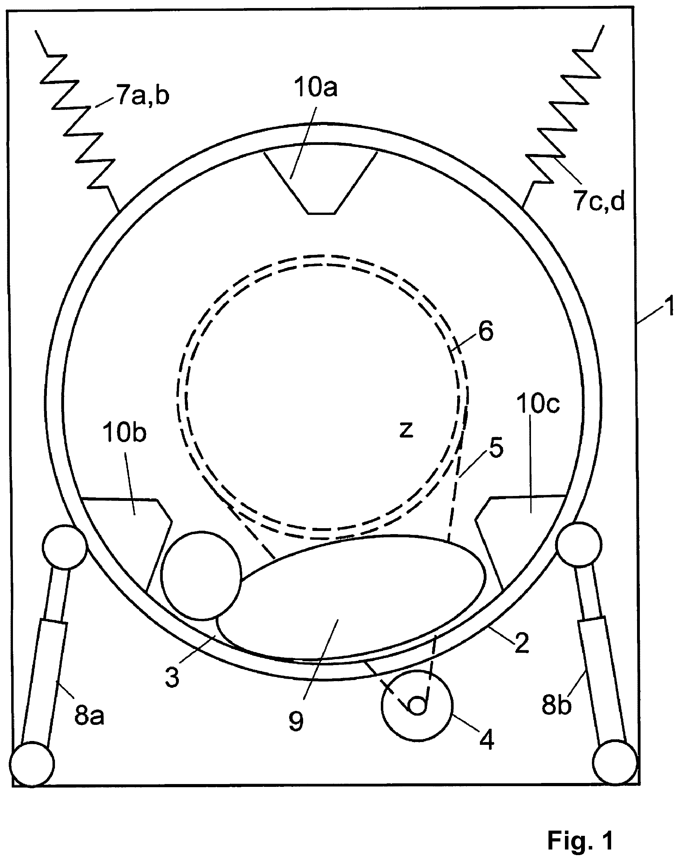

Fig. 1 zeigt schematisch eine Querschnittsansicht eines Haushaltsgeräts, das in diesem Fall eine Waschmaschine darstellt. Die Waschmaschine ist in ihrer betriebsgemäßen Aufstellposition gezeigt. Etwaige Ortsangaben beziehen sich auf die betriebsgemäße Aufstellposition. Ein Laugenbehälter 2 ist über Federn 7a,b und 7c,d an einem Gehäuse 1 bzw. nicht weiter beschriebenen tragfähigen Teilen des Gehäuses 1 schwingbeweglich aufgehängt. Innerhalb des Laugenbehälters 2 ist eine drehbar gelagerte Trommel 3 angeordnet, die während eines Programms im Laugenbehälter befindliche Wäsche bewegt. Die Trommel 3 ist in diesem Ausführungsbeispiel aus Edelstahl gefertigt und weist eine Vielzahl an Öffnungen auf, damit Wasser oder Waschflüssigkeit die Trommel durchfluten kann. Im Innern der Trommel 3 sind Mitnehmer 10a, 10b und 10c beispielsweise in Form von Trommelrippen angeordnet. Die Trommel 3 wird über ihr Lager 6 mittels eines elektrischen Motors 4 über einen Riemen 5 angetrieben. Anstelle des gezeigten Riemenantriebs 5 sind jedoch auch andere Antriebseinheiten denkbar. Der Motor 4 verfügt über einen Sensor zur Erfassung der Drehzahl. Alternativ dient er selbst als Drehzahlsensor. Alternativ kann die Waschmaschine einen separaten Drehzahlsensor aufweisen. Der jeweiligen vorstehenden Ausführungsform entsprechend weist die Waschmaschine eine Auswerteinheit auf, die Drehzahlsignale des Drehzahlsensors auswertet. Die Drehzahl des Motors 4 wird von einer Steuereinheit (nicht gezeigt) gesteuert. Das Lager 6 ist an dem hinteren Teil der Waschmaschine angeordnet, bezogen auf ihre betriebsgemäße Aufstellposition. Dem Lager 6 gegenüberliegend, d.h. in dem vorderen Teil der Waschmaschine hat das Gehäuse 1 eine Beladungsöffnung (nicht gezeigt), über die das Innere der Trommel 3 erreichbar ist, damit Wäsche eingefüllt werden kann und die mittels einer Tür (nicht gezeigt) verschließbar ist. In Fig. 1 befindet sich ein Kind 9 in der Trommel 3.

Zur Durchführung des Verfahrens wird der Motor 4 so angesteuert, dass er vorzugsweise eine Anzahl an Umdrehungen dreht, die die Trommel 3 um einen Winkel auslenkt, der kleiner als 90°, bevorzugt zwischen 20 und 50°, liegt. Sobald der Winkel erreicht wird, wird der Motor 4 stromlos geschaltet, sodass er kein Antriebs- oder Bremsmoment mehr ins System einbringt. Die Trommel 3 beginnt mit dem sich darin befindenden Kind 9 eine Pendelbewegung auszuführen, die mit der Zeit durch Reibungsverluste im System bedämpft wird, sodass sich nach einer gewissen Zeit wieder die Ruhelage einstellt. In diesem Zustand ohne Antriebsmomente reicht die Reibung zwischen dem Kind 9 und der Trommel 3 aus, damit die Trommel 3 und das Kind 9 die gleiche Pendelbewegung ausführen. Diese Pendelbewegung wird von der Auswerteinheit erkannt, die bevorzugt in den Motor 4 integriert ist. Durch Auswerten von Drehzahlsignalen, die ab dem Stromlosschalten über einen vorbestimmten ersten Zeitraum von dem Drehzahlsensor erfasst werden, wird ermittelt, wie ausgeprägt die Pendelbewegung ist. Dazu wird ab dem Zeitpunkt des Stromlosschaltens des Motors 4 das Drehzahlsignal mittels Differenzieren und betragsmäßiger Summation ausgewertet und ein Wert gebildet, der in einem vorbestimmten ersten Zeitraum ermittelt, wie ausgeprägt die Pendelbewegung ist. Die Pendelbewegung ist bei einem Kind 9 in der Trommel 3 aufgrund der konzentrierten Masse deutlich stärker als bei Wäsche in der Trommel 3. Weit außen liegende Massen führen zu einem starken Auspendeln der Trommel 3 und lassen auf das Kind 9 in der Trommel 3 schließen. Wenn der Wert oberhalb eines vorbestimmten ersten Schwellenwerts liegt, ist die Pendelbewegung so ausgeprägt, dass ein Kind 9 in der Trommel 3 festgestellt wird und das Programm wird unterbrochen. Vorzugsweise wird die Tür entriegelt oder geöffnet und/oder von der der Waschmaschine ein Warnsignal ausgegeben. Nach Ablauf eines vorbestimmten zweiten Zeitraums werden die vorstehenden Schritte vorzugsweise wiederholt, um festzustellen, ob sich das Kind 9 noch in der Trommel 3 befindet. Wenn festgestellt wird, dass das Kind 9 sich immer noch in der Trommel 3 befindet, werden die vorstehenden Schritte nochmals wiederholt. Wenn dann immer noch festgestellt wird, dass sich das Kind 9 in der Trommel 3 befindet, wird das Programm nach einer vorbestimmten Anzahl an Wiederholungen des Verfahrens abgebrochen. Die Waschmaschine gibt ein Warnsignal aus und/oder die Tür bleibt entriegelt oder geöffnet. Wenn der Wert unterhalb des vorbestimmten ersten Schwellenwerts liegt, ist die Pendelbewegung so wenig ausgeprägt, dass die Wahrscheinlichkeit gering ist, dass sich das Kind 9 in der Trommel 3 befindet und der vorgesehene Programmablauf wird fortgeführt ohne dass die Tür geöffnet oder entriegelt wird.

In einer alternativen Ausführungsform, die sich insbesondere für eine Waschmaschine mit hoher Beladungsmenge oder für Trockner anbietet, ist zur höheren Sicherheit ein vorbestimmter zweiter Schwellenwert vorgesehen. Je höher die Beladungsmenge einer Waschmaschine mit Wäsche ist, desto schwieriger ist es, das Kind 9 von der Wäsche in der Trommel 3 zu unterscheiden. Je feuchter Wäsche ist, desto schwerer ist sie, und daher ist es bei Trocknern ebenfalls schwieriger das Kind 9 in der Trommel 3 von feuchter eingeladener Wäsche zu unterscheiden. Der vorbestimmte zweite Schwellenwert ist kleiner als der vorbestimmte erste Schwellenwert. Wenn der Wert aus der Auswerteinheit größer als der vorbestimmte erste Schwellenwert ist, befindet sich das Kind 9 in der Trommel 3 und soll vor der Fortführung des Programms aus der Waschmaschine oder dem Trockner entfernt werden. Wenn der Wert aus der Auswerteinheit größer als der vorbestimmte zweite Schwellenwert aber kleiner als der vorbestimmte erste Schwellenwert ist, ist die Pendelbewegung stärker ausgeprägt als sie sein sollte, aber nicht so stark ausgeprägt, dass sich tatsächlich das Kind 9 in der Waschmaschine oder dem Trockner befinden muss. Es ist also nicht klar, ob diese Pendelbewegung von einem Kind 9 in der Trommel 3 oder durch das Gewicht der Wäsche bewirkt wird. Wenn der Wert aus der Auswerteinheit zwischen dem vorbestimmten zweiten Schwellenwert und dem vorbestimmten ersten Schwellenwert liegt, wird Wasser in die Trommel zugeführt, um das sich evtl. in der Trommel 3 befindende Kind zu Bewegung zu animieren. Wird nach Wasserzufuhr eine unzulässige Bewegung der Trommel 3 detektiert, wird die Tür entriegelt oder geöffnet und/oder ein Warnsignal wird von der Waschmaschine oder dem Trockner ausgegeben.

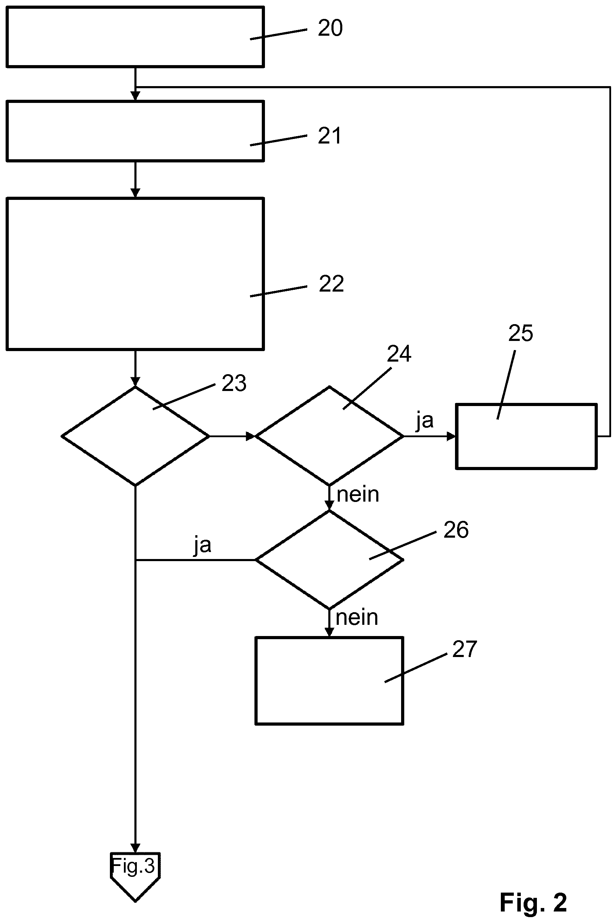

Die in Fig. 1 gezeigte Waschmaschine kann für die in den Fig. 2 bis 5 gezeigten Verfahren eingesetzt werden. Etwaige in den Fig. 2 bis 5 genannte Bauteile beziehen sich auf die in Fig. 1 gezeigte Waschmaschine.

Fig. 2 zeigt ein Ablaufdiagramm eines Verfahrens. Fig. 2 zeigt den Ablauf eines Verfahrens zur Erkennung einer Pendelbewegung der Trommel der Waschmaschine. In Schritt 20 wird das Programm der Waschmaschine gestartet. Das heißt, ein Programm zum Waschen von Wäsche wird durch Drücken einer Starttaste an der Waschmaschine in Gang gesetzt. In Schritt 21 wird die Trommel um 30° aus der Ruhelage ausgelenkt. Dies wird durch Steuern des Motors durch das Steuergerät bewerkstelligt, sodass der Motor die Trommel antreibt, sich um den Winkel von 30° zu bewegen. Wenn die Trommel den Winkel von 30° erreicht, wird der Motor in Schritt 21 stromlos geschaltet. In Schritt 22 wird ein Drehzahlsignal der Trommel ab dem Stromlosschalten des Motors über einen vorbestimmten ersten Zeitraum erfasst und die erfassten Drehzahlsignale durch die Auswerteinheit durch Bilden eines Werts ausgewertet. D.h., in Schritt 22 wird die Pendelstärke durch Varianzbildung des Drehzahlsignals ermittelt. Die Anforderungen an das Drehzahlsignal sind, dass die Spannung und die Frequenz proportional zur Drehzahl sind. Die Auflösung beträgt 0,5°. Es ist erforderlich, dass eine Drehung bei 0,5 min$^{-1}$ erkannt wird. In Schritt 22 wird eine Spannungsanalyse des Drehzahlsignals für eine Zeit von 2 Sek. durchgeführt. Die Ermittlung der Varianz des Drehzahlsignals bei einer Abtastrate von 200 Hz kann nach folgender Formel erfolgen:

$$\text{Varianz} = \frac{1}{N-1} \cdot \left( \sum_{i=1}^{N} U_i^2 - \frac{1}{N} \cdot \left( \sum_{i=1}^{N} U_i \right)^2 \right)$$

mit N = 400, wobei U die erfasste Drehzahl darstellt.

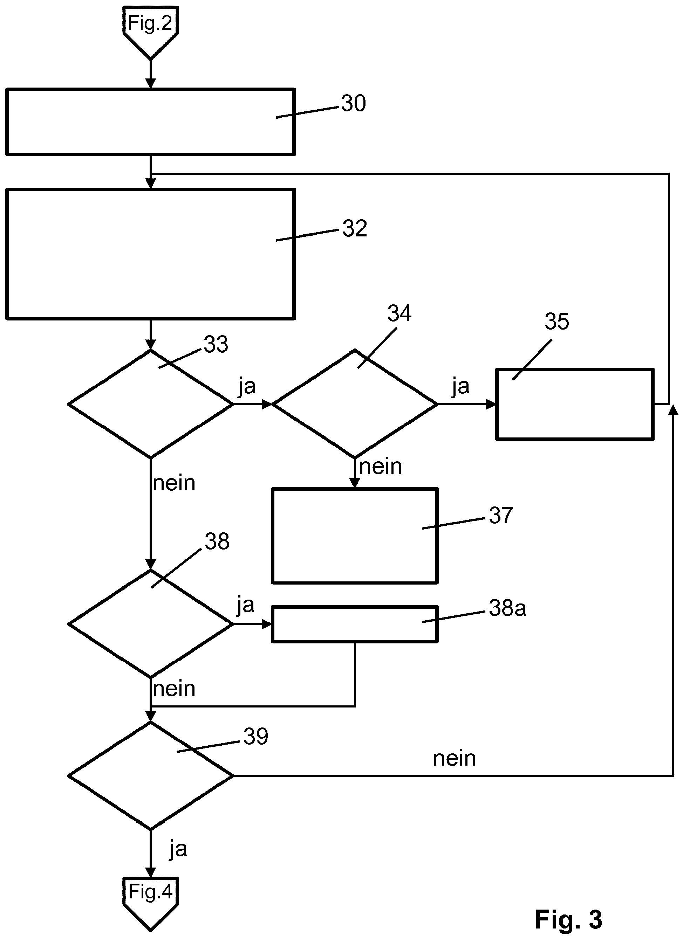

In Schritt 23 wird ermittelt, ob die Varianz größer ist als ein vorbestimmter erster Schwellenwert. Wenn die Varianz kleiner ist als der vorbestimmte erste Schwellenwert, d.h. es wird kein Kind in der Trommel erkannt, wird das Verfahren mit Schritt 30 fortgesetzt, der in Fig. 3 gezeigt und beschrieben wird. Wenn die Varianz größer ist als der vorbestimmte erste Schwellenwert, d.h. es wird ein Kind in der Trommel erkannt, wird das Verfahren mit Schritt 24 fortgesetzt. In Schritt 24 wird festgestellt, zum wievielten Mal ein Kind in der Trommel erkannt wird. Wenn N_LE < N_LE1_max, mit N_LE als Zähler für die Anzahl der Pendelerkennung, der zu Beginn des Programms auf Null gesetzt ist und N_LE1 max als maximale Anzahl an Malen, die das Verfahren wiederholt wird, wird das Verfahren mit Schritt 25 fortgesetzt (ja). In Schritt 25 wird das Programm für einen vorbestimmten zweiten Zeitraum unterbrochen und wird die Tür entriegelt und der Zähler wird um 1 heraufgesetzt, sodass gilt: N_LE = N_LE + 1. Nach Schritt 25 wird das Verfahren nach Ablauf des vorbestimmten zweiten Zeitraums ab Schritt 21 fortgeführt. Wird in Schritt 24 festgestellt, dass N_LE = N_LE1_max (nein), schließt sich an Schritt 24 Schritt 26 an, in dem ermittelt wird, ob das Programm eine Zufuhr von Wasser in die Trommel vorsieht. Wenn nein, wird das Programm in Schritt 27 abgebrochen und die Tür entriegelt oder geöffnet und/oder ein Warnsignal ausgegeben, um darauf hinzuweisen, dass sich ein Kind in der Waschmaschine befindet. Wenn ja, schließt sich an Schritt 26 das in Fig. 3 gezeigte Verfahren an.

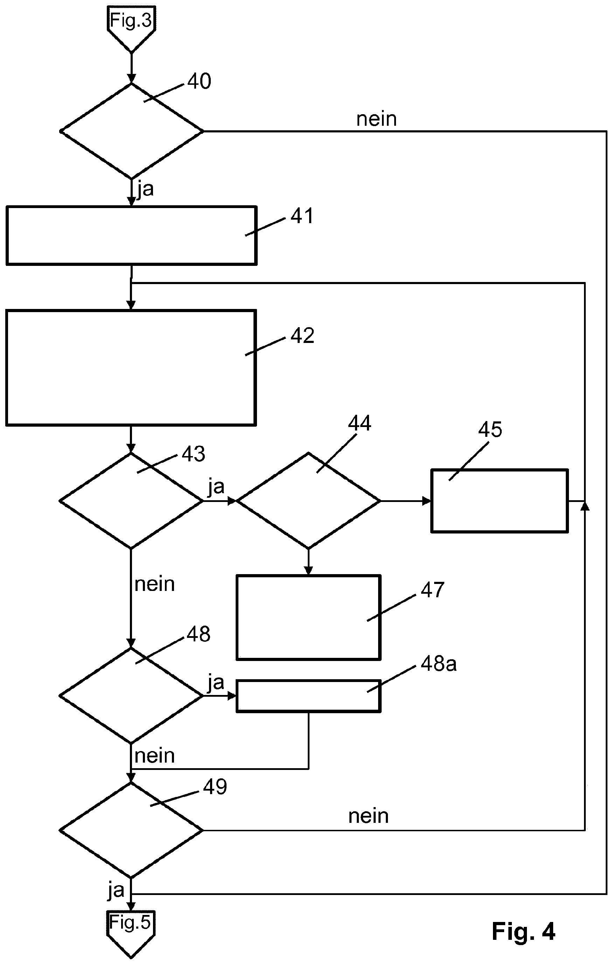

Fig. 3 zeigt ein Ablaufdiagramm eines sich an das in Fig. 2 gezeigte Verfahren anschließenden Verfahrens. Fig. 3 zeigt einen Ablauf eines Verfahrens zur Erkennung einer Bewegung beim Pumpen. Das in Fig. 3 gezeigte Verfahren beginnt mit Schritt 30, der sich an Schritt 23 oder 26 des in Fig. 2 gezeigten Verfahren anschließt. In Schritt 30 wird eine Pumpe zum Abpumpen von Flüssigkeit aus der Trommel bzw. dem Laugenbehälter insbesondere sogenannte Laugenpumpe aktiviert. Das Aktivieren der Pumpe dient in erster Linie dazu, dass sich ein evtl. in der Trommel befindendes Kind durch den Lärm und die verursachte Bewegung der Pumpe erschrickt und bewegt. Der in Fig. 2 erläuterte Zähler wird in dem Schritt 30 zudem auf Null zurückgesetzt, sodass N_LE=0. Dann wird Schritt 32 durchgeführt, der dem Schritt 22 aus Fig. 2 entspricht. Im Gegensatz zu Schritt 22 beträgt in Schritt 32 N 200. Nach Schritt 32 wird Schritt 33 ausgeführt. In Schritt 33 wird ermittelt, ob die in Schritt 32 ermittelte Varianz größer als der vorstehend beschriebene vorbestimmte vierte Schwellenwert ist. Wenn ja, d.h. es wird ein Kind in der Trommel erkannt, wird das Verfahren mit Schritt 34 fortgesetzt. In dem Schritt 34 wird festgestellt, zum wievielten Mal ein Kind in der Trommel erkannt wird. Wenn N_LE < N_LE2_max, mit N_LE als Zähler für die Anzahl der Bewegungserkennung beim Pumpen, der zu Beginn des Programms auf Null gesetzt ist, und N_LE2max als maximale Anzahl an Malen, die das Verfahren wiederholt wird, wird das Verfahren mit Schritt 35 fortgesetzt (ja). In Schritt 35 wird das Programm für einen vorbestimmten sechsten Zeitraum unterbrochen und wird die Tür entriegelt und der Zähler wird um 1 heraufgesetzt, sodass gilt: N_LE = N_LE + 1. Nach Schritt 35 wird das Verfahren nach Ablauf des vorbestimmten sechsten Zeitraums ab Schritt 32 fortgeführt. Wird in Schritt 34 festgestellt, dass N_LE = N_LE2_max, d.h. die Antwort auf die Frage, ob die in Schritt 32 ermittelte Varianz größer ist als ein vorbestimmter vierter Schwellenwert, lautet nein, schließt sich an Schritt 34 Schritt 37 an. In dem Schritt 37 wird das Programm abgebrochen und die Tür entriegelt oder geöffnet und/oder ein Warnsignal ausgegeben, um darauf hinzuweisen, dass sich ein Kind in der Waschmaschine befindet. Wenn die in Schritt 33 ermittelte Varianz kleiner ist als der vorbestimmte vierte Schwellenwert, d.h. es wird kein Kind in der Trommel erkannt und die Frage, ob die in Schritt 32 ermittelte Varianz größer ist als der vorbestimmte vierte Schwellenwert wird verneint, wird das Verfahren mit Schritt 38 fortgesetzt. In Schritt 38 wird ermittelt, ob die Pumpzeit überschritten oder der Druck unterschritten wird. Wenn mindestens eine der beiden Fragen mit ja beantwortet wird, schließt sich an Schritt 38 Schritt 38a an, in dem die Pumpe ausgeschaltet wird. Nach Schritt 38a wird das Verfahren mit Schritt 39 fortgeführt. Wenn beide der in Schritt 38 gestellten Fragen mit nein beantwortet werden, wird nach Schritt 38 ebenfalls Schritt 39 durchgeführt. In Schritt 39 wird überprüft, ob ein vorbestimmter fünfter Zeitraum abgelaufen ist. Wenn nein, dann wird das Verfahren ab Schritt 32 fortgeführt. Wenn ja, dann wird zu dem in Fig. 4 beschriebenen Verfahren übergegangen und mit Schritt 40 fortgefahren.

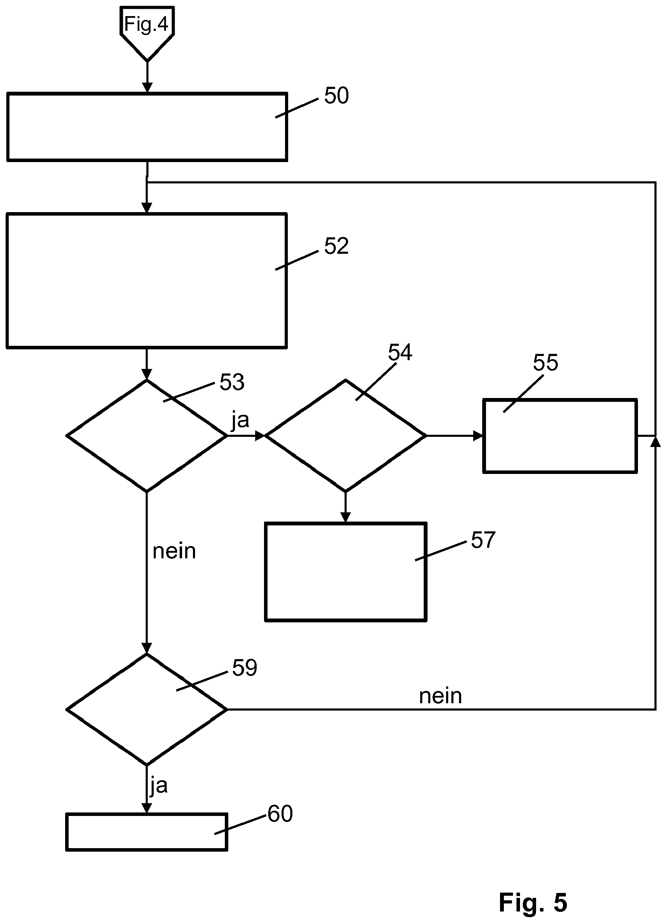

Fig. 4 zeigt ein Ablaufdiagramm eines sich an das in Fig. 3 gezeigte Verfahren anschließenden Verfahrens. Nach dem in Fig. 3 gezeigten Verfahren Schritt 39 wird Schritt 40 durchgeführt. In Schritt 40 wird ermittelt, ob das Programm eine Zufuhr von Wasser in die Trommel vorsieht. Wenn nein, dann wird zu dem in Fig. 5 gezeigten Verfahren übergangen.

Wenn ja, dann wird Schritt 41 durchgeführt. In Schritt 41 wird ein Zulauf von Wasser in die Trommel aktiviert. Zudem wird in dem Schritt 41 der in Fig. 2 erläuterte Zähler auf Null zurückgesetzt, sodass N_LE=0. Anschließend wird Schritt 42 durchgeführt, der dem in Fig. 3 durchgeführten Schritt 32 entspricht. Zur Beschreibung der genauen Durchführung des Schritts 42 wird auf Fig. 3 verwiesen. An Schritt 42 schließt sich Schritt 43 an. In dem Schritt 43 wird ermittelt, ob die in Schritt 42 ermittelte Varianz größer als ein vorbestimmter fünfter Schwellenwert ist. Wenn ja, d.h. es wird ein Kind in der Trommel erkannt, wird das Verfahren mit Schritt 44 fortgesetzt. In Schritt 44 wird festgestellt, zum wievielten Mal ein Kind in der Trommel erkannt wird. Wenn N_LE < N_LE3_max, mit N_LE als Zähler für die Anzahl der Bewegungserkennung beim Wasserzulauf, der zu Beginn des Programms auf Null gesetzt ist, und N_LE3max als maximale Anzahl an Malen, die das Verfahren wiederholt wird, wird das Verfahren mit Schritt 45 fortgesetzt. In Schritt 45 wird das Programm für einen vorbestimmten achten Zeitraum unterbrochen und wird die Tür entriegelt und der Zähler wird um 1 heraufgesetzt, sodass gilt: N_LE = N_LE + 1. Nach Schritt 45 wird nach Ablauf des vorbestimmten achten Zeitraums das Verfahren ab Schritt 42 fortgeführt. Wird in Schritt 44 festgestellt, dass N_LE = N_LE3_max, schließt sich an Schritt 44 Schritt 47 an, in dem das Programm abgebrochen und die Tür entriegelt oder geöffnet und/oder ein Warnsignal ausgegeben wird, um darauf hinzuweisen, dass sich ein Kind in der Waschmaschine befindet. Wenn die in Schritt 43 ermittelte Varianz kleiner ist als ein vorbestimmter fünfter Schwellenwert, d.h. es wird kein Kind in der Trommel erkannt und die Antwort auf die Frage ob die in Schritt 42 ermittelte Varianz größer als der vorbestimmte fünfte Schwellenwert ist, lautet nein, wird das Verfahren mit Schritt 48 fortgesetzt. In Schritt 48 wird ermittelt, ob die Wasserzuführung in die Trommel abgeschlossen ist. Wenn ja, dann schließt sich an den Schritt 48 Schritt 48a an, in dem die Wasserzuführung gestoppt wird. Nach dem Schritt 48a wird das Verfahren mit Schritt 49 fortgeführt. Wenn in dem Schritt 48 festgestellt wird, dass die Wasserzuführung in die Trommel nicht abgeschlossen ist (nein), wird nach Schritt 48 ebenfalls Schritt 49 durchgeführt. In dem Schritt 49 wird überprüft, ob ein vorbestimmter siebente Zeitraum abgelaufen ist. Wenn nein, dann wird das Verfahren ab Schritt 42 fortgeführt. Wenn ja, dann wird zu dem in Fig. 5 beschriebenen Verfahren übergegangen und mit Schritt 50 fortgefahren.

Fig. 5 zeigt ein Ablaufdiagramm eines sich an das in Fig. 4 gezeigte Verfahren anschließenden Verfahrens. Nach dem in Fig. 4 gezeigten Schritt 49 oder 40 wird Schritt 50 durchgeführt. In Schritt 50 wird der in Fig. 2 erläuterte Zähler auf Null zurückgesetzt, sodass N_LE=0. Anschließend wird Schritt 52 durchgeführt, der dem in Fig. 3 durchgeführten Schritt 32 entspricht. Zur Beschreibung der genauen Durchführung des Schritts 52 wird auf Fig. 3 verwiesen. An den Schritt 52 schließt sich Schritt 53 an. In dem Schritt 53 wird ermittelt, ob die in Schritt 52 ermittelte Varianz größer als ein vorbestimmter sechster Schwellenwert ist. Wenn ja, d.h. es wird ein Kind in der Trommel erkannt, wird das Verfahren mit Schritt 54 fortgesetzt. In Schritt 54 wird festgestellt, zum wievielten Mal ein Kind in der Trommel erkannt wird. Wenn N_LE < N_LE4_max, mit N_LE als Zähler für die Anzahl der Bewegungserkennung, der zu Beginn des Programms auf Null gesetzt ist, und N_LE4max als maximale Anzahl an Malen, die das Verfahren wiederholt wird, wird das Verfahren mit Schritt 55 fortgesetzt. In Schritt 55 wird das Programm für den vorstehend beschriebenen vorbestimmten zehnten Zeitraum unterbrochen und wird die Tür entriegelt und der Zähler wird um 1 heraufgesetzt, sodass gilt: N_LE = N_LE + 1. Nach Schritt 55 wird nach Ablauf eines vorbestimmten zehnten Zeitraums das Verfahren ab Schritt 52 weiter durchgeführt. Wird in Schritt 54 festgestellt, dass N_LE = N_LE4_max, schließt sich an Schritt 54 Schritt 57, in dem das Programm abgebrochen und die Tür entriegelt oder geöffnet und/oder ein Warnsignal ausgegeben wird, um darauf hinzuweisen, dass sich ein Kind in der Waschmaschine befindet. Wenn die in Schritt 53 ermittelte Varianz kleiner ist als der vorbestimmte sechste Schwellenwert, d.h. es wird kein Kind in der Trommel erkannt und die Frage, ob die Varianz größer als ein vorbestimmter sechster Schwellenwert ist, wird verneint, wird das Verfahren mit Schritt 59 fortgesetzt. In dem Schritt 59 wird überprüft, ob ein vorbestimmter neunter Zeitraum abgelaufen ist. Wenn nein, dann wird das Verfahren ab Schritt 52 fortgeführt. Wenn ja, wird mit Schritt 60 begonnen. In dem Schritt 60 wird das Programm ausgeführt. Dass heißt, ab Schritt 60 beginnt der Waschvorgang der Waschmaschine.

In den Schritten 22, 32, 42 und 52 wird jeweils die Varianz aus den Drehzahlsignalen ermittelt. Die Empfindlichkeit der Varianz kann in jedem dieser Schritte individuell eingestellt werden. Es hat sich gezeigt, dass eine hohe Empfindlichkeit der Varianz in den Schritten 22, 32 und 52 vorteilhaft ist, während die Empfindlichkeit der Varianz in Schritt 42 vorzugsweise niedriger gegenüber der in den Schritten 22, 32 und 52 ist. Genauso können die jeweiligen Zeiträume in den Schritten 25, 35, 45 und 55, in denen das Programm unterbrochen wird, jeweils individuell eingestellt werden. Die jeweiligen Zeiträume in den in Fig. 2 bis 5 gezeigten Verfahren, in denen die Erkennung der Pendelbewegung, der Bewegung beim Pumpen, der Bewegung bei Wasserzufuhr und bei der Bewegung nach Wasserzufuhr durchführt werden, können ebenfalls jeweils individuell festgelegt werden.

**Bezugszeichenliste**

| | |
|---|---|
| 1 | Gehäuse |
| 2 | Laugenbehälter |
| 3 | Trommel |
| 4 | Motor |
| 5 | Riemenantrieb |
| 6 | Lager |
| 7a,b,c,d | Federn |
| 8a,b | Stoßdämpfer |
| 9 | Kind |
| 10a,b,c | Mitnehmer |

**Patentansprüche**

1. Verfahren zum Betreiben eines Haushaltsgeräts mit einem Gehäuse (1), einer in dem Gehäuse angeordneten drehbeweglichen Trommel (3) zur Aufnahme von Wäsche, einem Motor (4) zum Antrieb der Trommel (3), einer Steuereinrichtung zum Steuern des Motors (4) und einer Auswerteinheit, **gekennzeichnet durch** die nach Starten eines Programms des Haushaltsgeräts durchgeführten Schritte

    - Steuern des Motors (4) durch das Steuergerät derart, dass die Trommel (3) zur Ausführung einer Pendelbewegung von dem Motor (4) angetrieben und um einen Winkel <90° bewegt wird und bei Erreichen des Winkels der Motor (4) stromlos geschaltet wird,
    - Erfassen eines Drehzahlsignals der Trommel (3) ab dem Stromlosschalten des Motors (4) über einen vorbestimmten ersten Zeitraum und Auswerten der erfassten Drehzahlsignale durch die Auswerteinheit durch Bilden eines Werts, und
    - Unterbrechen des Programms, wenn der Wert größer als ein vorbestimmter erster Schwellenwert ist.

2. Verfahren nach Anspruch 1, **dadurch gekennzeichnet, dass** im Falle des Unterbrechens des Programms die Schritte nach Ablauf eines vorbestimmten zweiten Zeitraums wiederholt werden.

3. Verfahren nach Anspruch 1 oder 2, **dadurch gekennzeichnet, dass** der Wert durch Differenzieren der erfassten Drehzahlsignale und betragsmäßige Summation gebildet wird.

4. Verfahren nach einem der vorangehenden Ansprüche, **dadurch gekennzeichnet, dass** der Winkel zwischen 20 und 50° liegt.

5. Verfahren nach einem der vorangehenden Ansprüche, **dadurch gekennzeichnet, dass** die Antriebsleistung des Motors (4) im Bereich von 50 und 500 W liegt.

6. Verfahren nach einem der vorangehenden Ansprüche, **dadurch gekennzeichnet, dass** nach Unterbrechen des Programms eine Tür des Haushaltsgeräts, die eine in dem Gehäuse (1) angeordnete Beladungsöffnung zum Beladen der Trommel (3) verschließt, entriegelt oder geöffnet wird und/oder ein Warnsignal ausgegeben wird.

7. Verfahren nach einem der vorangehenden Ansprüche, **gekennzeichnet durch** die Schritte

   Zuführen einer vorbestimmten Menge Wasser in die Trommel (3), wenn der Wert zwischen einem vorbestimmten zweiten Schwellenwert, der kleiner ist als der vorbestimmte erste Schwellenwert, und dem vorbestimmten ersten Schwellenwert liegt,
   Erfassen eines Drehzahlsignals der Trommel (3) über einen vorbestimmten dritten Zeitraum nach dem Zuführen der Menge Wasser in die Trommel (3),
   Auswerten der erfassten Drehzahlsignale durch die Auswerteinheit durch Bilden einer Größe,
   Unterbrechen des Programms über einen vorbestimmten vierten Zeitraum, wenn die Größe größer ist als ein vorbestimmter dritter Schwellenwert, und
   Wiederholen der vorstehenden Schritte bei Unterbrechung des Programms nach Ablauf des vorbestimmten vierten Zeitraums.

8. Verfahren nach einem der vorangehenden Ansprüche, **dadurch gekennzeichnet, dass** das Haushaltsgerät eine Waschmaschine ist und das Programm, wenn es eine vorbestimmte Anzahl an Malen unterbrochen wird, fortgeführt wird, wenn das Programm eine Zufuhr an Wasser in die Trommel (3) vorsieht, und dass das Programm, wenn es eine vorbestimmte Anzahl an Malen unterbrochen wird, abgebrochen wird, wenn das Programm keinen Zulauf an Wasser in die Trommel (3) vorsieht.

9. Verfahren nach Anspruch 8, **dadurch gekennzeichnet, dass**, wenn das Programm eine Zufuhr an Wasser in die Trommel (3) vorsieht, die Schritte

   Aktivieren einer Pumpe zum Abpumpen von Flüssigkeit aus der Trommel (3),
   Erfassen eines Drehzahlsignals der Trommel (3) über einen vorbestimmten fünften Zeitraum,
   Auswerten der erfassten Drehzahlsignale durch die Auswerteinheit durch Bilden eines Abpump-Werts,
   Unterbrechen des Programms über einen vorbestimmten sechsten Zeitraum, wenn der Abpump-Wert größer ist als ein vorbestimmter vierter Schwellenwert,
   Wiederholen der vorstehenden Schritte bei Unterbrechung des Programms nach Ablauf des vorbestimmten sechsten Zeitraums eine vorbestimmte Anzahl an Malen, und
   Abbrechen des Programms, wenn die vorbestimmte Anzahl an Malen erreicht wird, durchgeführt werden.

10. Verfahren nach Anspruch 9 **dadurch gekennzeichnet, dass**, wenn das Programm eine Zufuhr an Wasser in die Trommel (3) vorsieht, nacheinander die Schritte

   Aktivieren eines Zulaufs an Wasser in die Trommel (3),
   Erfassen eines Drehzahlsignals der Trommel (3) über einen vorbestimmten siebenten Zeitraum nach dem Zuführen der Menge Wasser in die Trommel (3),
   Auswerten der erfassten Drehzahlsignale durch die Auswerteinheit durch Bilden eines Wasserzufuhr-Werts,
   Unterbrechen des Programms über einen vorbestimmten achten Zeitraum, wenn der Wasserzufuhr-Wert größer ist als ein vorbestimmter fünfter Schwellenwert,
   Wiederholen der vorstehenden Schritte bei Unterbrechung des Programms nach Ablauf des vorbestimmten achten Zeitraums eine vorbestimmte Anzahl an Malen,
   Abbrechen des Programms, wenn die vorbestimmte Anzahl an Malen erreicht wird, durchgeführt werden, und wenn das Programm nicht abgebrochen wird, die Schritte Deaktivieren des Zulaufs an Wasser in die Trommel (3),
   Erfassen eines Drehzahlsignals der Trommel (3) über einen vorbestimmten neunten Zeitraum,
   Auswerten der erfassten Drehzahlsignale durch die Auswerteinheit durch Bilden eines Enderkennung-Werts,
   Unterbrechen des Programms über einen vorbestimmten zehnten Zeitraum, wenn der Enderkennung-Wert größer ist als ein vorbestimmter sechster Schwellenwert,

bei Unterbrechung des Programms nach Ablauf des vorbestimmten zehnten Zeitraums Wiederholen der vorstehenden Schritte ab dem Schritt Deaktivieren des Zulaufs an Wasser in die Trommel (3) eine vorbestimmte Anzahl an Malen, und

Abbrechen des Programms, wenn die vorbestimmte Anzahl an Malen erreicht wird, durchgeführt werden.

**11.** Haushaltsgerät mit einem Gehäuse (1), einer in dem Gehäuse (1) angeordneten drehbeweglichen Trommel (3), einem Motor (4) zum Antrieb der Trommel (3), einer Steuereinrichtung zum Steuern des Motors (4) und einer Auswerteinheit, **dadurch gekennzeichnet, dass** die Steuereinrichtung dazu eingerichtet ist, das Haushaltsgerät gemäß einem Verfahren nach einem der Ansprüche 1 bis 10 zu betreiben.

**Claims**

**1.** Method for operating a domestic appliance comprising a housing (1), a rotationally movable drum (3) that is arranged in the housing and is intended for receiving laundry, a motor (4) for driving the drum (3), a control device for controlling the motor (4), and an evaluation unit, **characterised by** the following steps, which are carried out once a program of the domestic appliance has started:

- controlling the motor (4) by means of the control device such that the drum (3) is driven by the motor (4) in order to perform a rocking motion and is moved by an angle of <90° and, upon attaining the angle, the motor (4) is de-energised,
- detecting a rotational-speed signal of the drum (3), from the time at which the motor (4) is de-energised, over a predetermined first period, and evaluating the detected rotational-speed signals by means of the evaluation unit by forming a value, and
- interrupting the program if the value is greater than a predetermined first threshold value.

**2.** Method according to claim 1, **characterised in that**, in the event of the program being interrupted, the steps are repeated once a predetermined second period has elapsed.

**3.** Method according to either claim 1 or claim 2, **characterised in that** the value is formed by means of differentiation of the detected rotational-speed signals and the absolute summation.

**4.** Method according to any of the preceding claims, **characterised in that** the angle is between 20 and 50°.

**5.** Method according to any of the preceding claims, **characterised in that** the drive power of the motor (4) is in the range of 50 and 500 W.

**6.** Method according to any of the preceding claims, **characterised in that**, once the program has been interrupted, a door of the domestic appliance, which closes a loading opening arranged in the housing (1) for loading the drum (3), is locked, unlocked or opened and/or a warning signal is emitted.

**7.** Method according to any of the preceding claims, **characterised by** the steps of: feeding a predetermined amount of water into the drum (3) if the value is between a predetermined second threshold value, which is less than the predetermined first threshold value, and the predetermined first threshold value,

detecting a rotational-speed signal of the drum (3) over a predetermined third period after the amount of water has been fed into the drum (3),

evaluating the detected rotational-speed signals by means of the evaluation unit by forming a variable,

interrupting the program over a predetermined fourth period if the variable is greater than a predetermined third threshold value, and

repeating the above steps upon interruption of the program once the predetermined fourth period has elapsed.

**8.** Method according to any of the preceding claims, **characterised in that** the domestic appliance is a washing machine and the program, if interrupted a predetermined number of times, is continued if the program provides for water to be fed into the drum (3), and **in that** the program, if interrupted a predetermined number of times, is aborted if the program does not provide for any inflow of water into the drum (3).

**9.** Method according to claim 8, **characterised in that**, if the program provides for water to be fed into the drum (3), the steps of:

activating a pump in order to pump liquid out of the drum (3),

detecting a rotational-speed signal of the drum (3) over a predetermined fifth period,

evaluating the detected rotational-speed signals by means of the evaluation unit by forming a pump-out value,

interrupting the program over a predetermined sixth period if the pump-out value is greater than a predetermined fourth threshold value,

repeating the above steps a predetermined number of times upon interruption of the program once the predetermined sixth period has elapsed, and

aborting the program if the predetermined number of times is reached, are carried out.

**10.** Method according to claim 9, **characterised in that**, if the program provides for water to be fed into the drum (3), the steps of:

activating an inflow of water into the drum (3),

detecting a rotational-speed signal of the drum (3) over a predetermined seventh period after the amount of water has been fed into the drum (3),

evaluating the detected rotational-speed signals by means of the evaluation unit by forming a water-infeed value,

interrupting the program over a predetermined eighth period if the water-infeed value is greater than a predetermined fifth threshold value,

repeating the above steps a predetermined number of times upon interruption of the program once the predetermined eighth period has elapsed,

aborting the program if the predetermined number of times is reached, are carried out in succession, and

if the program is not aborted, the steps of: deactivating the inflow of water into the drum (3),

detecting a rotational-speed signal of the drum (3) over a predetermined ninth period,

evaluating the detected rotational-speed signals by means of the evaluation unit by forming an end-recognition value,

interrupting the program over a predetermined tenth period if the end-recognition value is greater than a predetermined sixth threshold value,

upon interruption of the program once the predetermined tenth period has elapsed, repeating the above steps a predetermined number of times from the step of deactivating the inflow of water into the drum (3), and

aborting the program if the predetermined number of times is reached, are carried out.

**11.** Domestic appliance comprising a housing (1), a rotationally movable drum (3) arranged in the housing (1), a motor (4) for driving the drum (3), a control device for controlling the motor (4), and an evaluation unit, **characterised in that** the control device is configured to operate the domestic appliance in accordance with a method according to any of claims 1 to 10.

## Revendications

**1.** Procédé permettant de faire fonctionner un appareil ménager comprenant un boîtier (1), un tambour (3), disposé de manière mobile en rotation dans le boîtier, servant à recevoir du linge, un moteur (4) servant à entraîner le tambour (3), un dispositif de commande servant à commander le moteur (4) et une unité d'évaluation, **caractérisé par** les étapes suivantes effectuées après le lancement d'un programme de l'appareil ménager :

- commander le moteur (4) au moyen de l'appareil de commande de telle sorte que le tambour (3) soit entraîné par le moteur (4) de manière à effectuer un mouvement oscillant et soit déplacé d'un angle < 90 ° et soit mis hors tension lorsque l'angle du moteur (4) est atteint,

- détecter un signal de vitesse de rotation du tambour (3) à partir de la mise hors tension du moteur (4) pendant un premier laps de temps prédéterminé et évaluer les signaux de vitesse de rotation détectés au moyen de l'unité d'évaluation en obtenant une valeur, et

- interrompre le programme lorsque la valeur est supérieure à une première valeur seuil prédéterminée.

**2.** Procédé selon la revendication 1, **caractérisé en ce qu'**en cas d'interruption du programme, les étapes sont répétées après expiration d'un deuxième laps de temps prédéterminé.

**3.** Procédé selon la revendication 1 ou 2, **caractérisé en ce que** la valeur est obtenue par dérivation des signaux de vitesse de rotation détectés et sommation des valeurs absolues.

**4.** Procédé selon l'une des revendications précédentes, **caractérisé en ce que** l'angle est compris entre 20 et 50°.

**5.** Procédé selon l'une des revendications précédentes, **caractérisé en ce que** la puissance d'entraînement du moteur (4) est comprise dans la plage entre 50 et 500 W.

**6.** Procédé selon l'une des revendications précédentes, **caractérisé en ce qu'**après l'interruption du programme, une porte de l'appareil ménager qui ferme une ouverture de chargement, disposée dans le boîtier (1), servant au chargement du tambour (3) est déverrouillée ou ouverte et/ou un signal d'avertissement est délivré.

**7.** Procédé selon l'une des revendications précédentes, **caractérisé par** les étapes consistant à
introduire une quantité prédéterminée d'eau dans le tambour (3), lorsque la valeur est comprise entre une deuxième valeur seuil prédéterminée qui est inférieure à la première valeur seuil prédéterminée et la première valeur seuil prédéterminée,
détecter un signal de vitesse de rotation du tambour (3) pendant un troisième laps de temps prédéterminé après l'introduction de la quantité d'eau dans le tambour (3),
évaluer les signaux de vitesse de rotation détectés au moyen de l'unité d'évaluation en obtenant une grandeur,
interrompre le programme pendant un quatrième laps de temps prédéterminé lorsque la grandeur est supérieure à une troisième valeur seuil prédéterminée, et
répéter les étapes précédentes en cas d'interruption du programme après expiration du quatrième laps de temps prédéterminé.

**8.** Procédé selon l'une des revendications précédentes, **caractérisé en ce que** l'appareil ménager est une machine à laver et le programme est, lorsqu'il est interrompu un nombre prédéterminé de fois, poursuivi lorsque le programme prévoit une introduction d'eau dans le tambour (3), et **en ce que** le programme est, lorsqu'il est interrompu un nombre prédéterminé de fois, arrêté lorsque le programme ne prévoit pas d'amenée d'eau dans le tambour (3).

**9.** Procédé selon la revendication 8, **caractérisé en ce que**, lorsque le programme prévoit une introduction d'eau dans le tambour (3), les étapes suivantes sont effectuées :

activer une pompe pour pomper du liquide hors du tambour (3),
détecter un signal de vitesse de rotation du tambour (3) pendant un cinquième laps de temps prédéterminé,
évaluer les signaux de vitesse de rotation détectés au moyen de l'unité d'évaluation en obtenant une valeur de pompage,
interrompre le programme pendant un sixième laps de temps prédéterminé lorsque la valeur de pompage est supérieure à une quatrième valeur seuil prédéterminée,
répéter les étapes précédentes en cas d'interruption du programme après expiration du sixième laps de temps prédéterminé un nombre prédéterminé de fois, et
arrêter le programme lorsque le nombre prédéterminé de fois est atteint.

**10.** Procédé selon la revendication 9, **caractérisé en ce que**, lorsque le programme prévoit une introduction d'eau dans le tambour (3), les étapes suivantes sont effectuées successivement :

activer une amenée d'eau dans le tambour (3),
détecter un signal de vitesse de rotation du tambour (3) pendant un septième laps de temps prédéterminé après l'introduction de la quantité d'eau dans le tambour (3),
évaluer les signaux de vitesse de rotation détectés au moyen de l'unité d'évaluation en obtenant une valeur d'introduction d'eau,
interrompre le programme pendant un huitième laps de temps prédéterminé lorsque la valeur d'introduction d'eau est supérieure à une cinquième valeur seuil prédéterminée,
répéter les étapes précédentes en cas d'interruption du programme après expiration du huitième laps de temps prédéterminé un nombre prédéterminé de fois,
arrêter le programme lorsque le nombre prédéterminé de fois est atteint, et
lorsque le programme n'est pas arrêté, les étapes suivantes sont effectuées :

désactiver l'amenée d'eau dans le tambour (3),
détecter un signal de vitesse de rotation du tambour (3) pendant un neuvième laps de temps prédéterminé,
évaluer les signaux de vitesse de rotation détectés au moyen de l'unité d'évaluation en obtenant une valeur de détection de fin,

interrompre le programme pendant un dixième laps de temps prédéterminé lorsque la valeur de détection de fin est supérieure à une sixième valeur seuil prédéterminée,

répéter les étapes précédentes, en cas d'interruption du programme après expiration du dixième laps de temps prédéterminé, à partir de l'étape de désactivation de l'amenée d'eau dans le tambour (3), un nombre prédéterminé de fois, et

arrêter le programme lorsque le nombre prédéterminé de fois est atteint.

11. Appareil ménager comprenant un boîtier (1), un tambour (3) disposé de manière mobile en rotation dans le boîtier (1), un moteur (4) servant à entraîner le tambour (3), un dispositif de commande servant à commander le moteur (4) et une unité d'évaluation, **caractérisé en ce que** le dispositif de commande est conçu pour faire fonctionner l'appareil ménager selon un procédé selon l'une des revendications 1 à 10.

**Fig. 1**

ja

nein

ja

nein

Fig.3

**Fig. 2**

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004049650 B3
- DE 102004049647 B3
- US 20110030460 A1